# FASCICULE DE BREVET EUROPEEN

(11) **EP 3 511 608 B1**
(45) Date de publication et mention de la délivrance du brevet: **11.05.2022**
(21) Numéro de dépôt: 19151435.5
(22) Date de dépôt: 11.01.2019
(51) Int. Cl.: F21S 41/24, F21S 41/151

(54) **MODULE OPTIQUE POUR VEHICULE AUTOMOBILE**
OPTISCHES MODUL FÜR EIN KRAFTFAHRZEUG
OPTICAL MODULE FOR MOTOR VEHICLE

(30) Priorité: 12.01.2018 FR 1850248
(43) Date de publication de la demande: 17.07.2019
(73) Titulaire: Valeo Vision, 93012 Bobigny Cedex (FR)
(72) Inventeur: RENAUD, Pierre, 93012 BOBIGNY Cedex (FR); JOERG, Alexandre, 93012 BOBIGNY Cedex (FR)
(74) Mandataire: Valeo Visibility

(56) Documents cités:
- EP-A1- 3 147 557
- EP-A2- 2 037 167
- DE-B3-102012 213 843
- DE-U1-202017 005 367

## Description

La présente invention concerne un module optique pour véhicule automobile, apte à générer un faisceau lumineux segmenté. La présente invention concerne en outre un véhicule automobile équipé d'un projecteur comportant au moins un tel module optique.

Dans ce contexte, des véhicules automobiles sont équipés de modules optiques aptes à émettre longitudinalement vers l'avant un faisceau lumineux segmenté, dit « multibeam » ou « pixel beam », par exemple en une ligne de segments rectangulaires ou encore en plusieurs lignes de segments carrés ou rectangulaires. Le faisceau lumineux segmenté projeté, composé d'une pluralité de faisceaux élémentaires juxtaposés ou se chevauchant, correspond à la projection sur une scène de route de l'image d'un réseau formé par les faces de sortie, de section rectangulaire, de guides de lumière associés respectivement à des sources lumineuses élémentaires primaires agencées en série. Le faisceau lumineux segmenté, c'est-à-dire composé d'une pluralité de faisceaux élémentaires, forme un faisceau lumineux adaptatif en ce que, en allumant ou en éteignant sélectivement chacune des sources lumineuses élémentaires primaires, il est possible de modifier la forme du faisceau lumineux segmenté projeté et d'éclairer spécifiquement certaines zones de la route en avant du véhicule, tout en laissant dans l'obscurité d'autres zones, ceci afin notamment de ne pas éblouir un véhicule détecté.

Un tel module optique est notamment utilisé dans des dispositifs d'éclairage agencés à l'avant du véhicule pour réaliser une fonction d'éclairage adaptatif aussi dite "ADB", acronyme de l'expression anglaise "Adaptative Driving Beam". Une telle fonction d'éclairage adaptatif est destinée à détecter de façon automatique un usager de la route susceptible d'être ébloui par un faisceau d'éclairage émis en mode feu de route par un projecteur du véhicule et à modifier la forme de ce faisceau d'éclairage de manière à créer une zone d'ombre formant un tunnel sombre à l'endroit où se trouve l'usager détecté tout en continuant à éclairer la route à grande portée de part et d'autre de l'usager. De façon réglementaire, la zone d'ombre doit être crée latéralement par rapport à l'axe optique, de manière par exemple à éviter l'éblouissement d'un véhicule tiers roulant en sens inverse à 50 mètres. Cette zone d'ombre peut ainsi être formée, selon la réglementation européenne R123 en vigueur à ce jour, avec un décalage transversal de 2.8° à 4° et un décalage vertical de 0.57° par rapport à l'intersection des lignes horizontales et verticales. On comprendra que ces informations sont données à titre d'exemple et qu'elles pourraient évoluer d'une règlementation à l'autre.

Les avantages de cette fonction d'éclairage adaptatif sont multiples : confort d'utilisation, meilleure visibilité par rapport à un éclairage en mode feu de croisement, risque d'éblouissement fortement réduit, conduite plus sûre.

Plus particulièrement, un tel module optique comporte généralement, outre le réseau précédemment évoqué de sources lumineuses élémentaires primaires, généralement formées par des diodes électroluminescentes aussi dite « LED », un premier élément optique comportant une pluralité de guides de lumière agencés en regard des sources lumineuses élémentaires primaires et une optique de projection, configurée pour mettre en forme les rayons émis par les sources lumineuses primaires et déviés par le premier élément optique, de manière à former un faisceau d'éclairage réglementaire. Les sources lumineuses élémentaires primaires sont agencées sur une carte à circuit imprimé plane qui s'étend dans un plan orthogonal à la direction de projection du faisceau lumineux segmenté. Les guides de lumière du premier élément optique s'étendent globalement longitudinalement, en présentant à leurs extrémités longitudinales une face d'entrée des rayons lumineux émis par les sources lumineuses élémentaires primaires et une face de sortie de ces rayons lumineux, le premier élément optique étant agencé par rapport à l'optique de projection de sorte que la face de sortie des guides de lumière soient disposés sensiblement dans le plan focal objet de l'optique de projection.

Les guides de lumières sont destinés à conformer les rayons de lumière émis par les sources lumineuses élémentaires primaires en un pinceau lumineux focalisé présentant la forme d'un pixel, généralement rectangulaire ou carré. Les faces de sortie des guides de lumière, disposées sensiblement dans le plan focal objet de l'optique de projection, forment un réseau de sources lumineuses élémentaires secondaires susceptibles d'être imagée à l'infini par l'optique de projection.

Un tel module optique requiert que l'image projetée des sources lumineuses élémentaires secondaires présente une distribution lumineuse et une netteté maîtrisée pour que le faisceau lumineux segmenté formé par l'assemblage des images des sources lumineuses élémentaires secondaires soit homogène. Ceci permet de garantir que le conducteur du véhicule ne soit pas perturbé par des variations d'éclairage dues à des dispersions d'intensité lumineuse, par exemple, dans les zones où plusieurs images de sources lumineuses élémentaires secondaires se superposent.

Tel que cela a pu être précisé précédemment, la fonction d'éclairage adaptatif dite ADB permet principalement de ne pas éblouir le conducteur situé dans la zone sombre tout en restant dans un mode d'éclairage d'intensité proche du feu de route, par la formation d'une bande sombre dans le faisceau segmenté projeté suite à l'extinction d'une ou plusieurs sources lumineuses élémentaires primaires. Lorsque l'ensemble des sources lumineuses élémentaires primaires est allumé, le faisceau segmenté projeté correspond au faisceau lumineux du feu de route, éclairant de manière globale la scène de route. Afin de respecter les règlementations relatives à l'éclairage en mode feu de route, ce faisceau lumineux global doit présenter une intensité maximale et suffisante en son centre. Dans ce contexte connu, il est prévu de disposer les guides de lumière du premier élément optique et les sources lumineuses élémentaires primaires de manière à ce que l'intensité lumineuse centrée sur l'axe longitudinal soit maximale. Plus particulièrement, il est connu de disposer le premier élément optique dans le module optique de sorte que les guides de lumière participant à la formation de sources lumineuses élémentaires secondaires de haute résolution soient agencés sur l'axe optique du module optique, afin que les images des pixels de plus haute résolution soient projetées sur la scène de route au centre du faisceau. On comprendra qu'une source lumineuse élémentaire secondaire de haute résolution présente une surface en sortie du premier élément optique qui est plus petite que la surface d'une source voisine de plus faible résolution, et qu'une source lumineuse élémentaire secondaire de haute résolution est formée au niveau de la face de sortie d'un guide de lumière présentant une surface de sortie, et par extension une surface d'entrée, qui est plus petite que les surfaces de sortie et d'entrée d'un guide voisin.

Toutefois, dans de tels modules optiques comprenant des guides de lumière, le faisceau lumineux segmenté projeté présente un niveau de luminosité parasite élevé, notamment sous l'effet d'un phénomène optique, connu sous l'appellation anglaise crosstalk, qui est dû à la diffusion de la lumière émise par les sources lumineuses élémentaires primaires dans toutes les directions et à la distance entre ces sources lumineuses élémentaires primaires et les guides de lumière. Plus particulièrement, des rayons émis par une source lumineuse élémentaire primaire sont dirigés principalement en direction du guide de lumière disposé directement en regard de cette source lumineuse élémentaire primaire, mais il convient de noter qu'une infime partie de ces rayons se dirige vers les guides de lumière voisins dans lesquels ils pénètrent par réfraction via une face latérale. Cette partie de rayons émis par une source donné est amenée à ressortir du premier élément optique au niveau de faces de sortie des guides de lumière qui ne correspondent pas à la face d'entrée en regard de la source primaire élémentaire primaire. Cette lumière parasite est particulièrement gênante lorsque l'on souhaite réaliser la bande sombre propre au fonctionnement de l'éclairage adaptatif, puisque des rayons émis par des sources non éteintes peuvent sortir du premier élément optique au niveau d'une face de sortie d'un guide correspondant à une source lumineuse éteinte. On comprend que ce phénomène s'amplifie lorsque la face d'entrée d'un guide de lumière est petite, et donc s'amplifie pour les sources lumineuses élémentaires secondaires de « haute résolution ».

Or, la création d'une bande sombre dans le faisceau segmenté projeté répond à des contraintes réglementaires qui imposent notamment, tel que précédemment cité, que cette bande sombre soit réalisée avec un décalage transversal de 2.8° à 4° par rapport à l'axe longitudinal. Il en résulte que les sources lumineuses qui permettent la projection de lumière entre l'axe optique et cette bande sombre restent allumées lors de la création de la bande sombre, ayant été précisé auparavant que ces sources lumineuses centrées sur l'axe optique sont les sources correspondantes des sources lumineuses élémentaires secondaire de haute résolution, plus propices à l'apparition du phénomène de parasite précédemment décrit.

Pour résoudre ce problème, on a déjà proposé de disposer entre chaque guide de lumière une paroi d'obturation, opaque, agencée parallèlement à l'axe optique du module optique, pour empêcher que les rayons émis par une source lumineuse qui ne pénètrent pas dans le guide de lumière directement en regard de cette source lumineuse puissent pénétrer dans un guide de lumière voisin qui ne lui est pas associé. Si elle peut être considérée comme efficace, cette solution implique la fabrication et la présence de pièces additionnelles dans le module, ce qui est préjudiciable au poids et au coût du module, et elle complique les opérations de montage du module. EP 2 037 167 A2 divulgue un module optique pour véhicule automobile connu de l'art antérieur.

L'invention s'inscrit dans ce contexte et vise à proposer un module optique présentant un agencement particulier de sorte à résoudre cet inconvénient.

L'invention propose ainsi un module optique pour véhicule automobile comprenant un premier élément optique comportant des guides de lumière et une optique de projection disposée à distance du premier élément optique et ayant un axe optique longitudinal, les guides de lumière étant alignés en une série, perpendiculairement à l'axe optique longitudinal et selon une direction transversale, les guides de lumière comportant des premiers guides de lumière disposés successivement les uns par rapport aux autres en étant interposés entre des deuxièmes guides de lumière, les premiers guides de lumière présentant chacun une dimension transversale inférieure à la dimension transversale équivalente de chacun des deuxièmes guides de lumière.

Les premiers guides de lumière sont majoritairement transversalement décalés par rapport à l'axe optique longitudinal. Selon l'invention, le premier élément optique comprend successivement des deuxièmes guides de lumière formant une première sous-série de deux à quatre deuxièmes guides de lumière, des premiers guides de lumière formant une deuxième sous-série de trois à huit premiers guides de lumière, et des deuxièmes guides de lumière formant une troisième sous-série de quatre à six deuxièmes guides de lumière.

Par dimension transversale équivalente, on comprend que la variation de la dimension transversale entre les premiers et deuxième guide de lumière peut être mesurée pour une face d'entrée ou pour une face de sortie de ces guides, dès lors que la comparaison se fait sur les mêmes faces d'un guide à l'autre.

Selon une série de caractéristiques pouvant être prises en combinaison ou indépendamment l'une de l'autre :
- au moins un tiers des premiers guides de lumière sont décalés par rapport à l'axe optique longitudinal,
- les premiers guides de lumière forment une série agencée par rapport à l'axe optique longitudinal de sorte que la totalité des premiers guides de lumière est situé d'un même côté de l'axe optique longitudinal,
- un axe longitudinal médian des premiers guides de lumière est décalé transversalement par rapport à l'axe optique longitudinal du module optique d'une valeur au moins égale à 0,5° et pouvant être comprise entre 0,5° et 5°; plus particulièrement, l'axe longitudinal médian des premiers guides de lumière est décalé transversalement par rapport à l'axe optique longitudinal du module optique d'une valeur comprise entre 2 et 5°, ce qui permet de couvrir la plage de valeurs angulaires telle qu'elle a été présenté précédemment en référence aux normes européennes pour la formation d'une zone d'ombre permettant d'éviter l'éblouissement d'un véhicule tiers ; on comprendra bien entendu que cette plage de valeurs pourrait évoluer en fonction de la règlementation appliquée ; par axe longitudinal médian, on comprend un axe longitudinal, parallèle à l'axe optique longitudinal du module optique, qui passe par le centre de la série transversale des premiers guides de lumière,
- les premiers guides de lumière et les deuxièmes guides de lumière forment ensemble un réseau prenant principalement la forme d'une matrice à deux dimensions perpendiculaires à l'axe optique longitudinal du module optique, cet axe optique longitudinal passant sensiblement au milieu de ladite matrice par rapport à la direction transversale,
- chacun des guides de lumière comporte une face d'entrée de rayons de lumière émis par une source lumineuse élémentaire primaire associée et une face de sortie des rayons de lumière qui est agencé dans un plan focal de l'optique de projection,
- la face d'entrée d'un premier guide de lumière présente une dimension transversale inférieure à la dimension transversale de la face d'entrée d'un deuxième guide de lumière,
- la face de sortie d'un premier guide de lumière présente une dimension transversale inférieure à la dimension transversale de la face de sortie d'un deuxième guide de lumière,
- les sources lumineuses élémentaires primaires sont agencées dans un plan parallèle au plan d'émission orthogonal, tous les guides de lumière présentant une longueur identique ou quasi-identique suivant l'axe optique longitudinal, étant entendu que les guides de lumière disposés à chacune des extrémités de la série peuvent présenter une longueur plus importante,
- le premier élément optique est réalisé en un bloc comportant la pluralité des guides de lumière, ledit premier élément optique présentant une face de sortie commune de rayons de lumière amenés à traverser l'un ou l'autre des guides de lumière,
- un deuxième élément optique peut être agencé entre le premier élément optique et l'optique de projection,
- les premiers guides de lumière sont chacun associés à au moins une source lumineuse élémentaire en vue de projeter des premiers faisceaux élémentaires et dans lequel les deuxièmes guides de lumière sont chacun associés à une source lumineuse élémentaire en vue de projeter des deuxièmes faisceaux élémentaires, l'optique de projection permettant la projection suivant l'axe longitudinal du véhicule d'un faisceau lumineux segmenté formé par les premiers faisceaux élémentaires et les deuxièmes faisceaux élémentaires, et les premiers faisceaux élémentaires sont majoritairement décalés par rapport à l'axe longitudinal du véhicule,
- le module optique comprend une unité de modulation de largeur d'impulsion configurée pour piloter au moins certaines des sources lumineuses élémentaires associées aux premiers guides de lumière de sorte que les premiers faisceaux élémentaires et les deuxièmes faisceaux élémentaires agencés au centre du faisceau lumineux segmenté présentent une même intensité lumineuse.

L'invention a également pour objet un véhicule automobile comportant au moins un projecteur comprenant un module optique tel que décrit précédemment.

Le véhicule peut présenter un axe d'allongement médian, parallèle à la direction d'avancement du véhicule, et comportant au moins un projecteur comprenant un module optique tel que précédemment décrit, et l'au moins un projecteur peut être un projecteur gauche, le module étant agencé alors selon l'invention en ce que les premiers guides de lumière sont majoritairement situés entre l'axe optique longitudinal et l'axe longitudinal médian du véhicule.

D'autres caractéristiques, détails et avantages de l'invention ressortiront plus clairement à la lecture de la description donnée ci-après à titre indicatif en relation avec des dessins dans lesquels :
- la figure 1 illustre une représentation schématique en coupe, vue de dessus, d'un module optique selon l'invention comprenant principalement un premier élément optique, un deuxième élément optique et une optique de projection selon un axe de projection longitudinal,
- la figure 2 illustre une vue en perspective d'un premier élément optique apte à équiper un module optique conforme à celui illustré sur la figure 1, ledit premier élément optique comprenant une pluralité de guides de lumière,
- la figure 3 est une vue schématique de dessus illustrant une répartition des guides de lumière du premier élément optique par rapport à l'axe optique d'une optique de projection illustré en aval du premier élément optique,
- la figure 4 est une vue similaire à celle de la figure 3, illustrant le trajet des rayons lumineux dans le module optique pour la projection d'un faisceau segmenté,
- la figure 5 illustre une vue similaire à la figure 4 dans laquelle des premiers guides de lumière sont éteints pour former un tunnel sombre dans le faisceau segmenté projeté.

Dans la suite de la description, on adoptera à titre non limitatif des orientations :
- longitudinale L, selon l'axe optique longitudinal de l'optique de projection du module optique et la direction d'avancement du véhicule associé et orientée d'arrière en avant relativement au sens d'avancement normal du véhicule ;
- verticale V, selon l'axe perpendiculaire au sol sur lequel circule le véhicule et orientée de bas en haut, l'orientation verticale V étant utilisée à titre de repère géométrique sans nécessairement de rapport avec la direction de la gravité ; et
- transversale T, selon un axe perpendiculaire aux axe longitudinaux et verticaux décrits précédemment et orientée de gauche à droite.

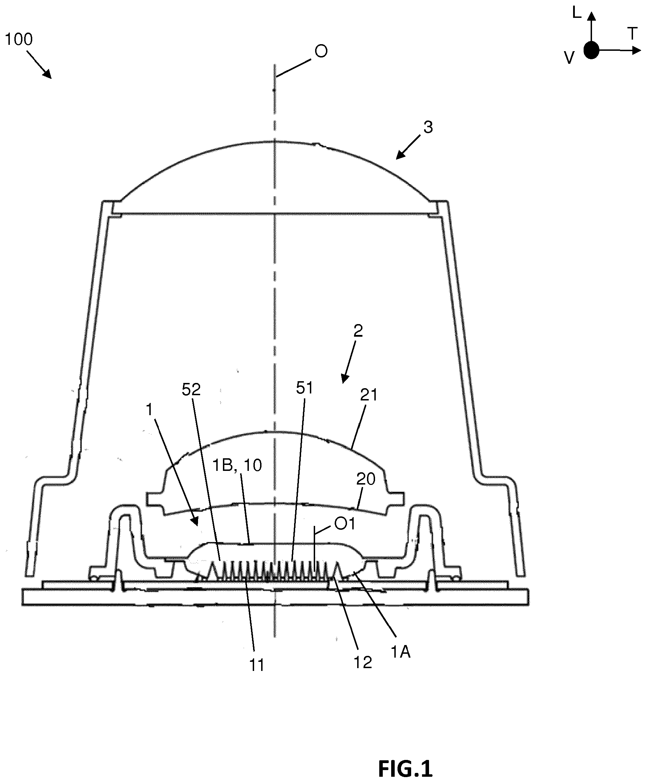

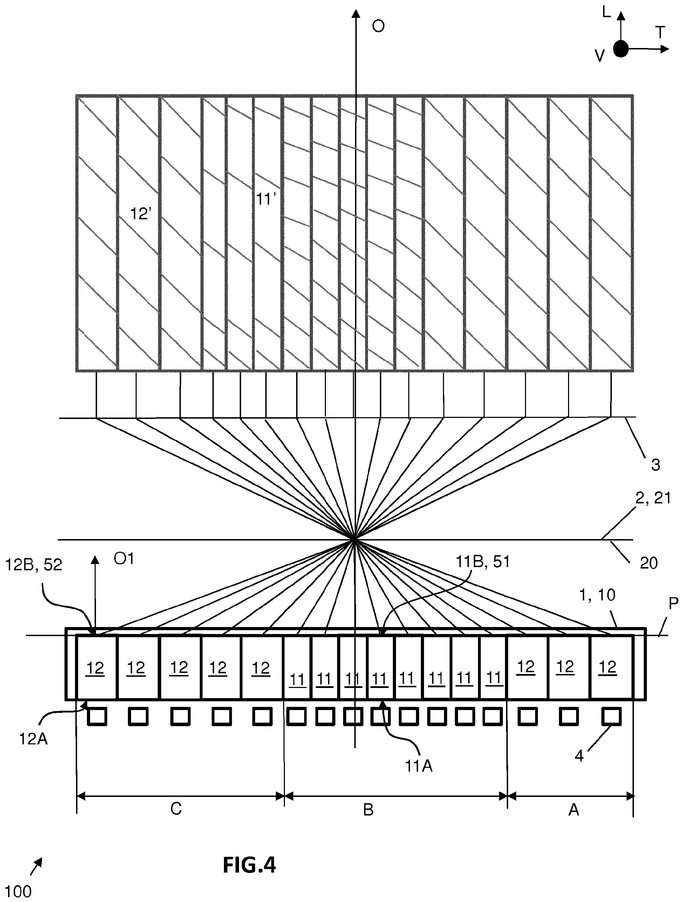

En se référant aux figures 1 et 4 ensemble, on a représenté un module optique 100 qui est destiné à équiper un projecteur pour véhicule automobile. Le module optique 100 est destiné à émettre un faisceau lumineux segmenté orienté longitudinalement vers l'avant. Il s'agit d'un faisceau lumineux adaptatif qui est composé d'une pluralité de faisceaux élémentaires 11', 12' (visibles sur la figure 4). Un tel module optique 100 est notamment apte à remplir une fonction de faisceau adaptatif aussi connue sous l'appellation "ADB" pour "Adaptative Driving Beam", étant entendu qu'il est aussi apte à remplir une fonction de feu d'éclairage directionnel, aussi connue sous l'appellation "DBL" pour "Dynamic Bending Light".

Le projecteur pour véhicule automobile comporte au moins un tel module optique 100 et l'on comprend que pour réaliser par ailleurs d'autres fonctions lumineuses, d'éclairage et/ou de signalisation, d'autres modules optiques peuvent être agencés dans le même projecteur.

Le module optique 100 comporte principalement des sources lumineuses élémentaires primaires 4, un premier élément optique 1 muni de guides de lumières et une optique de projection 3 qui est agencée longitudinalement en avant et à distance du premier élément optique 1, l'optique de projection 3 étant conformée de manière à présenter un axe optique longitudinal O. Le cas échéant, le module optique 100 comporte un deuxième élément optique 2, dit élément optique de correction de champ, qui est interposé entre le premier élément optique 1 et l'optique de projection 3.

Les sources lumineuses élémentaires primaires 4 sont formées par des diodes électroluminescentes. Le module optique 100 comprend au moins une rangée de sources lumineuses élémentaires primaires 4 formée par une succession de diodes électroluminescentes selon ici la direction transversale T. Les sources lumineuses élémentaires primaires 4 sont portées par une face avant d'une carte de circuit imprimé 5.

La carte de circuit imprimé permet, d'une part, l'alimentation des diodes électroluminescentes et, d'autre part, de porter une unité de modulation de largeur d'impulsion pour le pilotage de l'intensité lumineuse émise par les diodes électroluminescentes afin de permettre notamment de prévoir un mode de fonctionnement à 100% de l'intensité lumineuse et un mode dégradé dans lequel l'intensité lumineuse émise est par exemple de 80%, tel que cela sera décrit plus en détail ci-après.

Les sources lumineuses élémentaires primaires 4 émettent des rayons de lumière dans toutes les directions et l'agencement des diodes électroluminescentes formant ces sources sur la carte de circuit imprimés génère un cône d'émission de lumière très ouvert, par exemple de type lambertien.

Dans le contexte d'un module optique 100 visant à délivrer un faisceau lumineux segmenté, on associe à chaque source lumineuse élémentaire primaire 4 un guide de lumière 11, 12 agencé spécifiquement dans le premier élément optique 1 pour formater au niveau de sa face de sortie 11B, 12B, c'est-à-dire son extrémité libre opposée à la source lumineuse élémentaire primaire, une image secondaire, ou source lumineuse élémentaire secondaire 51, 52, formant un pixel de forme carré ou rectangulaire. A cet effet, le premier élément optique 1 est agencé longitudinalement en avant de la rangée de sources lumineuses élémentaires primaires 4 pour modifier la distribution des rayons de lumière émis.

Les faces de sortie 11B, 12B des guides de lumière sont disposées au niveau du plan focal objet de l'optique de projection 3 du module optique 100. On comprendra alors que le premier élément optique 1 est agencé entre les sources lumineuses élémentaires primaires 4 et l'optique de projection 3.

Avant de décrire plus en détails la forme et la disposition des guides de lumière dans le premier élément optique 1, on va décrire tout d'abord les éléments agencés en aval de ce premier élément optique, à savoir l'élément optique de correction de champ 2 et l'optique de projection 3.

L'optique de projection 3 présente ici la forme d'une lentille. De manière connue, l'optique de projection 3 comporte une surface focale objet qui s'étend globalement orthogonalement à l'axe optique longitudinal O qu'elle coupe au niveau du foyer objet de l'optique de projection 3 et chacune des sources lumineuses élémentaires secondaires 51, 52 est située sensiblement sur cette surface focal objet de l'optique de projection, afin que ces sources secondaires soient imagées de façon nette et que le faisceau lumineux segmenté projeté sur la scène de route par l'intermédiaire de cette optique de projection présente des caractéristiques lumineuses souhaitées pour son utilisation.

Théoriquement, l'optique de projection 3 est censée présenter une surface focale objet plane et parfaitement orthogonale à l'axe optique longitudinal O. Cependant, dans la réalité, il est connu que l'optique de projection 3 présente une surface focale objet ayant un défaut de courbure sphérique concave. Un tel défaut est appelé aberration de champ de Petzval.

Pour permettre de focaliser correctement l'optique de projection 3 sur les sources de lumière élémentaires secondaires 51, 52, un deuxième élément optique 2, dit élément optique de correction de champ, est interposé entre le plan d'émission P et l'optique de projection 3. Ce deuxième élément optique 2 est spécifiquement conçu pour corriger l'aberration de courbure de champ de l'optique de projection 3.

Le deuxième élément optique 2 est conformé de manière que, vue depuis le premier élément optique 1, l'image de la surface focale courbe de l'optique de projection 3 par le deuxième élément optique 2 s'étende dans un plan focal objet en coïncidence avec un plan d'émission P dans lequel émergent les sources lumineuses élémentaires secondaires 51, 52. L'optique de projection 3 aura été préalablement positionnée de manière que la surface focale objet soit tangente avec le plan d'émission P, le deuxième élément optique 2 ayant pour effet d'aplanir la surface focale objet vers le plan d'émission P.

Le deuxième élément optique 2 est formé par au moins une lentille de correction de champ aussi connue sous sa dénomination anglaise de "field flattener lens". Dans l'exemple illustré, le deuxième élément optique 2 comporte une unique lentille de correction de champ, étant entendu que ce deuxième élément optique 2 pourrait comporter une pluralité de lentilles de correction de champ agencées en série le long de l'axe optique, ainsi que d'autres types de lentilles pour corriger d'autres aberrations optiques telles que l'astigmatisme ou la distorsion par exemple.

Le deuxième élément optique 2 comporte une face d'entrée 20 de rayons de lumière qui est agencée longitudinalement à distance du plan d'émission P. La face d'entrée 20 du deuxième élément optique 2 est agencée longitudinalement à distance de la face de sortie 10 du premier élément optique 1 et/ou des faces de sorties 11B, 12B des guides de lumière portés par ce premier élément optique. Cette face d'entrée 20 du deuxième élément optique 2 peut présenter une forme courbe, concave ou convexe, en son centre à proximité de l'axe optique longitudinal O de l'optique de projection.

Le deuxième élément optique 2 comporte en outre une face de sortie 21 des rayons de lumière, qui est agencée longitudinalement en vis-à-vis et à distance de l'optique de projection 3 et qui présente une forme convexe.

Grâce à l'agencement du deuxième élément optique 2 entre le premier élément optique 1 et l'optique de projection 3, il est possible de réaliser des guides de lumière 11, 12 courts présentant une longueur sensiblement identique d'une extrémité transversale à l'autre de la série. Le premier élément optique 1 est ainsi plus aisé à fabriquer. Il est notamment possible d'utiliser des matériaux qui ne permettent pas d'obtenir des guides de lumière 11, 12 longs par moulage. Le premier élément optique 1 selon l'invention est ainsi susceptible d'être obtenu en polycarbonate. On comprendra bien sûr, qu'a fortiori, le premier élément optique 1 réalisé selon les enseignements de l'invention peut être réalisé en verre, en silicone, ou bien encore en polyméthylméthacrylate (PMMA) ou en tout autre matériau adapté pour la réalisation de guides de lumière 11, 12.

En se référant aux figures 1 et 4 ensemble, le premier élément optique 1 comporte une partie arrière 1A et une partie avant 1B formant un ensemble monobloc.

La partie avant 1B est une partie de mise en forme des faisceaux élémentaires 11', 12' émis par les sources lumineuses élémentaires secondaires 51, 52. La partie avant 1B comporte la face de sortie 10 commune des rayons de lumière du premier élément optique 1, de sorte qu'elle permet, par exemple, d'étaler les faisceaux élémentaires 11', 12' verticalement et/ou horizontalement. Cette partie avant 1B est réalisée venue de matière avec les guides de lumière 11, 12 de manière que le premier élément optique 1 soit réalisé en un bloc.

Le premier élément optique 1 comporte, dans sa partie arrière 1A tournée vers les sources lumineuses élémentaires primaires 4 à l'opposé de l'optique de projection 3, un réseau qui est formé d'une pluralité de guides de lumière 11, 12. Le réseau est orienté principalement selon une direction transversale T. Plus particulièrement, le réseau prend ici la forme d'une matrice présentant deux rangées 112 transversales de guides de lumière 11, 12 agencées l'une au-dessus de l'autre, selon une direction verticale perpendiculaire à la direction d'allongement des rangées de guides de lumière. Chaque guide de lumière 11, 12 est associé à au moins une source lumineuse élémentaire primaire 4, étant compris que tout ou partie des guides, et notamment les guides de lumière agencés aux extrémités transversales des rangées, peut être associé à une pluralité de sources lumineuses élémentaires primaires 4.

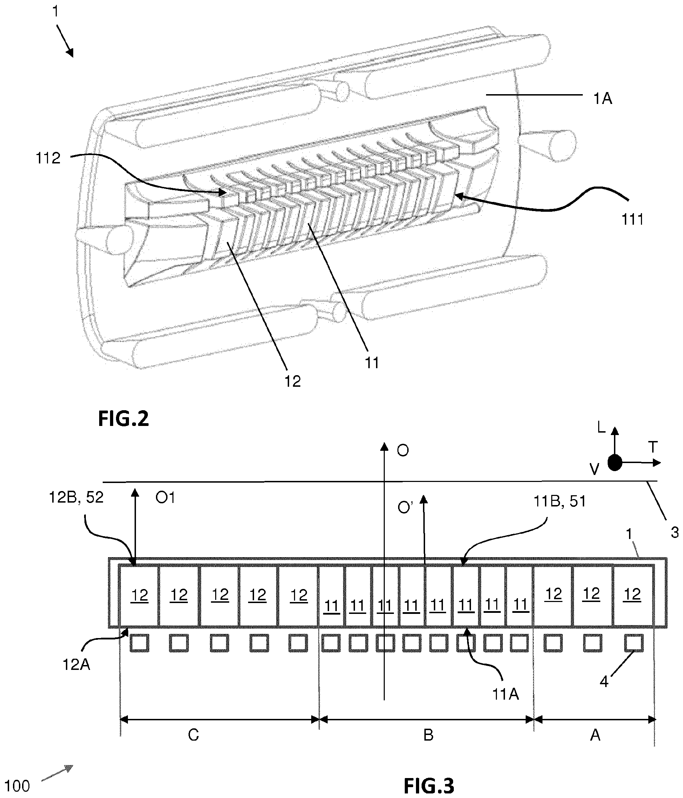

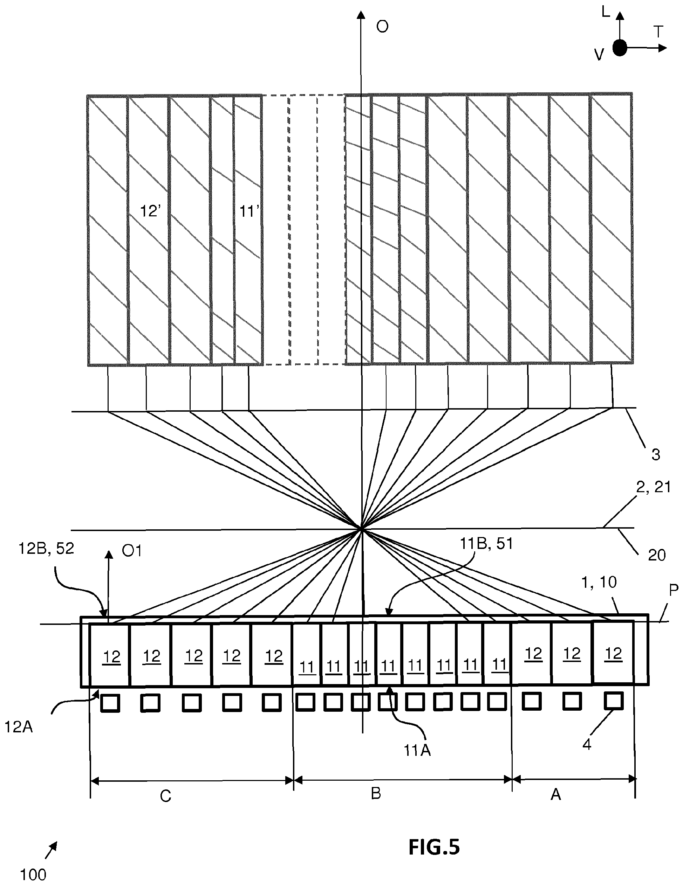

Une première rangée 111, ici la rangée inférieure sur la figure 2, est disposée en regard de diodes électroluminescentes formant sources lumineuses élémentaires primaires 4 pour réaliser un premier ensemble de faisceaux élémentaires, visibles sur les figures 4 et 5, dont la juxtaposition transversale participe à former une partie supérieure du faisceau segmenté projeté sur la route, c'est-à-dire à une partie du faisceau à longue portée. La deuxième rangée 112, ici la rangée supérieure sur la figure 2, est disposée en regard de diodes électroluminescentes formant sources lumineuses élémentaires primaires 4 pour réaliser un deuxième ensemble de faisceaux élémentaires, non représenté sur les figures et dont la juxtaposition transversale participe à former une partie inférieure du faisceau segmenté projeté sur la route.

Dans la suite de la description, on va décrire plus précisément l'agencement d'une de ces rangées de guides de lumière 11, 12, à savoir la rangée inférieure de guides de lumière 11, 12 représentée à la figure 2, étant entendu que c'est cette rangée susceptible d'émettre un faisceau à longue portée qu'il convient de piloter pour former une zone sombre. Toutefois, sans sortir du contexte de l'invention, le détail de ce qui va suivre pourra être appliqué à la deuxième rangée de guides, et pourrait être appliqué à d'autres rangées de guides si le module optique est configuré de manière à ce qu'au moins trois rangées de guides soient prévues.

La rangée inférieure comporte deux types de guides de lumière 11, 12. Plus particulièrement, la rangée inférieure comprend des premiers guides de lumière 11 et des deuxièmes guides de lumière 12 qui se distinguent les uns des autres par leur dimension transversale, c'est-à-dire la dimension selon la direction principale de la série de guides. Les premiers guides de lumière 11 sont disposés successivement les uns par rapport aux autres en étant interposés entre des deuxièmes guides de lumière 12. Et la dimension transversale des faces d'entrée 11A, respectivement des faces de sortie 11B, des premiers guides de lumière 11 est plus petite que la dimension transversale des faces d'entrée 12A, respectivement des faces de sortie 12B, des deuxièmes guides de lumière 12.

En d'autres termes, la rangée inférieure de guides de lumière 11, 12 ménagée dans le premier élément optique 1 est configurée de telle sorte que plusieurs guides de lumière 11, 12 se succèdent en une série transversale, au moins un guide de lumière 11 de premier type se distinguant des autres par une dimension transversale plus petite, et ce ou ces guides de lumière 11 de premier type sont disposés dans une position centrale, entouré(s) par des guides de lumière 12 de deuxième type, c'est à dire avec une dimension transversale plus grande que celle des guides de lumière 11 du premier type. Par position centrale des premiers guides de lumière 11, ou guides de lumière du premier type, on comprend que des deuxièmes guides de lumière 12, ou guides de lumière du deuxième type, sont présents de part et d'autre transversalement de ces guides de lumière 11 du premier type, sans que cela implique une répartition symétrique des guides de lumière 12 du deuxième type autour des guides de lumière 11 du premier type. Par ailleurs, il est à noter que des guides de lumière du deuxième type peuvent présenter entre eux des dimensions différentes, et notamment les guides agencées aux extrémités transversales de la rangée qui sont beaucoup plus larges et évasés.

A la figure 3, on a représenté schématiquement une série transversale de guides de lumière formant une rangée, ici la première rangée, ou rangée inférieure, 111 et leur position par rapport à l'axe optique longitudinal O défini par la forme de l'optique de projection 3. Selon l'invention, les premiers guides de lumière 11 sont majoritairement décalés transversalement par rapport à cet axe optique longitudinal O. En d'autres termes, une majorité de premiers guides de lumière sont disposés à droite (tel que visible sur les figures 3 à 5), respectivement à gauche de l'axe optique longitudinal, vus depuis l'intérieur du véhicule, dans le cas d'application du module optique dans un véhicule à conducteur à gauche, c'est-à-dire pour trafic à droite, respectivement à conducteur à droite, c'est-à-dire pour trafic à gauche. On décrira plus tard le trajet des rayons lumineux émis en sortie de ces guides de lumière à travers l'optique de projection, pour illustrer l'intérêt d'un tel décalage transversal des guides de lumière.

Selon le mode de réalisation illustré, la rangée transversale de guides de lumière est formée successivement par une première sous-série A de trois deuxièmes guides de lumière 12, puis par une deuxième sous-série B de huit premiers guides de lumière 11, et enfin par une troisième sous-série C de cinq deuxièmes guides de lumière 12.

Chaque guide de lumière 11, 12 s'étend selon un axe principal longitudinal O1, sensiblement parallèle à l'axe optique longitudinal O, depuis une face d'entrée 11A, 12A de rayons de lumière émis par les sources lumineuses élémentaires primaires 4, jusqu'à la face de sortie 11B, 12B des rayons de lumière précédemment décrite. Chaque guide de lumière 11, 12 est conçu pour guider les rayons lumineux entrant par la face d'entrée 11A, 12A jusqu'à la face de sortie 11B, 12B de manière à former une desdites sources lumineuses élémentaires secondaires 51, 52.

Plus particulièrement, les faces d'entrée 11A, 12A des guides de lumière 11, 12 sont agencées dans un plan commun qui est sensiblement parallèle au plan de la carte de circuit imprimé. Lorsque le premier élément optique 1 est agencé dans le module optique 100, chaque face d'entrée 11A, 12A est ainsi positionnée longitudinalement en vis-à-vis et à proximité d'une source lumineuse élémentaire primaire 4 associée, de manière que la majeure partie des rayons de lumière émis par chaque source lumineuse élémentaire primaire 4 entre dans le guide de lumière 11, 12 associé.

Les faces de sortie 11B, 12B des guides de lumière 11, 12, formant les sources lumineuses élémentaires secondaires 51, 52, sont agencées dans un plan d'émission P orthogonal à l'axe optique longitudinal O. Le plan d'émission P est le plan focal objet de l'optique de projection 3, afin que l'image des sources lumineuses élémentaires secondaires 51, 52 soit projetée à l'infini. La représentation est ici schématique avec un plan droit, mais l'homme du métier saurait donner, lors de la mise en œuvre de l'invention, un profil courbe à ce plan d'émission P.

Tel que précédemment décrit, la dimension transversale des faces d'entrée 11A, respectivement des faces de sortie 11B, des premiers guides de lumière 11 est plus petite que la dimension transversale des faces d'entrée 12A, respectivement des faces de sortie 12B, des deuxièmes guides de lumière 12. Plus particulièrement, la dimension transversale de la face de sortie des premiers guides de lumière est plus petite que la dimension transversale de la face de sortie des deuxièmes guides de lumière, de manière à fournir des pixels de plus haute résolution en sortie des premiers guides de lumière qu'en sortie des deuxièmes guides de lumière.

Ainsi, les premiers guides de lumière 11 présentent chacun par leur face de sortie 11B une section adaptée pour produire un premier faisceau élémentaire 11' dit haute résolution, et avec une haute intensité lumineuse, émis depuis une première source lumineuse élémentaire secondaire 51. De la même façon, les deuxièmes guides de lumière 12 présentent chacun une section adaptée pour produire un deuxième faisceau élémentaire 12' dit basse résolution, et avec une basse intensité lumineuse, émis depuis une deuxième source lumineuse élémentaire secondaire 52. On comprend que les dénominations haute et basse résolution, ou haute et basse intensité lumineuse, sont choisies pour caractériser que l'un des faisceaux élémentaires a une meilleure résolution que l'autre, sans qu'il soit question de dépassement d'un seuil donné.

Chaque premier faisceau élémentaire et chaque deuxième faisceau élémentaire est de la forme souhaitée pour la fonction du module optique 100 équipant le projecteur.

Les faces de sortie 11B, 12B des guides de lumière 11, 12 forment ainsi une rangée de sources lumineuses élémentaires secondaires 51, 52, dont chacune est apte à émettre un faisceau élémentaire selon une direction principale longitudinale de projection depuis le plan d'émission P, pour la projection d'un faisceau global règlementaire par l'optique de projection. Les faces de sortie 11B, 12B formant les sources lumineuses élémentaires secondaires 51, 52 sont agencées à proximité immédiate les unes des autres, par exemple à 0,1 mm d'écart les unes des autres.

Par ailleurs, il convient de noter que les guides de lumière 11, 12 illustrés à la figure 3 sont représentés schématiquement. En pratique, le premier élément optique est formé par un ensemble monobloc obtenu par un moule unique et les guides de lumière 11, 12 présentent tous une forme évasée, de sorte que la dimension transversale de la face d'entrée 11A, 12A est légèrement inférieure à la dimension transversale de la face de sortie 11B, 12B, avec un angle de dépouille équivalent pour chacun des guides de lumière. De la sorte, la différence de dimension transversale entre les premiers et deuxièmes guides de lumière évoquée au niveau des faces de sortie des guides de lumière se retrouve au niveau des faces d'entrée de ces guides. Un pixel haute résolution, avec une petite face de sortie 11B pour former une source lumineuse élémentaire secondaire 51 de petite taille, correspond ainsi à un guide avec une petite face d'entrée, à côté de laquelle peuvent passer les rayons émis par la source lumineuse élémentaire primaire 4 correspondante.

On comprend que la face de sortie 11B d'un premier guide de lumière 11 correspond à une première source lumineuse élémentaire secondaire 51 et que la face de sortie 12B d'un deuxième guide de lumière 12 correspond à une deuxième source lumineuse élémentaire secondaire 52.

Les premiers guides de lumière 11 et les deuxièmes guides de lumière 12 sont alignés en une série transversale, perpendiculairement à l'axe optique longitudinal O, avec les première, deuxième et troisième sous-séries A, B, C de guides de lumière 11, 12 qui sont successivement disposées les unes par rapport aux autres selon la direction transversale T.

Tel que précisé précédemment, selon l'invention, les premiers guides de lumière 11 sont majoritairement décalés transversalement par rapport à l'axe optique longitudinal O de l'optique de projection 3, c'est-à-dire du module optique. Un tel décalage est constaté lorsque l'optique de projection 3 et le premier élément optique 1 sont en position dans le module optique 100. Les premiers guides de lumière 11, ici au nombre de huit, sont agencés en série de sorte que l'on peut définir un axe longitudinal médian O' passant par le centre de cette série des premiers guides de lumière, c'est-à-dire à la jonction entre le quatrième et le cinquième guide de lumière de cette série. Tel qu'illustré sur la figure 3, cet axe longitudinal médian O' est décalé transversalement par rapport à l'axe optique longitudinal O d'une valeur de décalage Δ, l'axe optique longitudinal O passant sensiblement au milieu de la série transversale des guides de lumière d'une même rangée.

Plus particulièrement, selon ce mode de réalisation, le premier élément optique 1 comporte huit premiers guides de lumière 11 agencés de telle sorte que, vue depuis l'intérieur du véhicule deux premiers guides de lumière 11 sont situés à gauche de l'axe optique longitudinal O, cinq premiers guides de lumière 11 sont situés à droite de l'axe optique longitudinal O et un premier guide de lumière 11 est situé en chevauchement de l'axe optique longitudinal O. Conformément à ce qui a été décrit précédemment, on comprend que dans une version trafic à gauche du véhicule, l'agencement des premiers guides de lumière serait inversé.

L'optique de projection 3 est agencée longitudinalement à distance en avant du plan d'émission P. L'optique de projection 3 est configuré pour projeter, suivant un axe longitudinal du véhicule, une image des sources lumineuses élémentaires secondaires pour former des premiers et deuxièmes faisceaux élémentaires 11', 12' orientées vers l'avant et dont la combinaison permet de former sur la scène de route le faisceau lumineux segmenté.

Le faisceau lumineux segmenté est ainsi formé par des premiers et deuxièmes faisceaux élémentaires 11', 12' successivement alignés les uns par rapport aux autres.

Tel que cela est notamment visible sur les figures 4 et 5, la disposition particulière des guides de lumière par rapport à l'axe optique longitudinal implique une disposition particulière des faisceaux élémentaires par rapport à l'axe longitudinal du véhicule, sensiblement parallèle à l'axe optique du module optique. Dans l'exemple illustré, et selon la même direction transversale T définie par la disposition des première, deuxième et troisième sous-séries A, B, C de guides de lumière 11, 12, on peut observer que le faisceau lumineux segmenté est formé successivement par des deuxièmes faisceaux élémentaires 12' résultant des rayons émis par des deuxièmes sources lumineuses élémentaires secondaires 52 associées à la première sous-série A de deuxièmes guides de lumière, puis par des premiers faisceaux élémentaires 11' résultant des rayons émis par des premières sources lumineuses élémentaires secondaires 51 associées à la deuxième sous-série B de premiers guides de lumière, et enfin par des deuxièmes faisceaux élémentaires 12' résultant des rayons émis par des deuxièmes sources lumineuses élémentaires secondaires 52 associées à troisième sous-série C de deuxièmes guides de lumière.

Dans ce faisceau lumineux segmenté projeté sur la route par l'optique de projection 3, de façon similaire au décalage transversal des guides de lumière par rapport à l'axe optique longitudinal O, les premiers faisceaux élémentaires 11' sont majoritairement décalés transversalement par rapport à l'axe longitudinal du véhicule. En d'autres termes, une majorité des premiers faisceaux élémentaires 11' se situe d'un côté de l'axe longitudinal et une minorité des premiers faisceaux élémentaires 11' se situe de l'autre côté de l'axe longitudinal. Tel qu'illustré sur la figure 4 notamment, et du fait de l'imagerie directe de ce module optique, on comprend que le décalage transversal par rapport à un axe longitudinal est inversé selon que l'on considère les guides de lumière, décalés majoritairement ici sur la droite vue depuis l'intérieur du véhicule, ou les faisceaux élémentaires correspondant formant partie du faisceau lumineux segmenté projeté sur la route, décalés majoritairement ici sur la gauche vue depuis l'intérieur du véhicule, pour pouvoir former un tunnel sombre avec les premiers faisceaux élémentaires 11' qui soit règlementairement présent à gauche de l'axe optique avec un décalage de l'ordre d'au moins 0,5°, et plus particulièrement de l'ordre de 2° à 5° dans le cas d'un trafic à droite, pour ne pas éblouir un véhicule à 50 mètres.

L'invention n'est toutefois pas limitée à cette configuration illustrée et on pourra prévoir que les premiers guides de lumière 11 et les premiers faisceaux élémentaires 11' correspondants sont tous décalés par rapport à l'axe optique longitudinal O, respectivement d'un côté puis de l'autre. En d'autres termes, dans cette variante non représentée, tous les premiers guides de lumière 11 sont situés d'un même côté de l'axe optique longitudinal O, qui passe par ailleurs comme décrit précédemment par le centre de la série transversale des guides de lumière, et tous les premiers faisceaux élémentaires 11' sont situées de l'autre côté de l'axe optique longitudinal O.

On va maintenant décrire l'application de l'invention, en se référant plus particulièrement aux figures 4 et 5.

En projection sur une scène de route, chaque source lumineuse élémentaire secondaire 51, 52 permet la projection d'un faisceau élémentaire 11', 12' permettant d'éclairer une zone de la scène de route. Les zones se chevauchent légèrement de manière à assurer un éclairage homogène. Chaque source lumineuse élémentaire primaire 4 est commandée individuellement de manière à pouvoir éclairer sélectivement chacune des zones de la scène de route. On comprend que l'allumage d'une source lumineuse élémentaire primaire 4 génère un pixel image sur une source lumineuse élémentaire secondaire 51, 52 et donc l'éclairage d'une zone de la scène de route, et qu'inversement l'extinction d'une même source lumineuse élémentaire primaire 4 génère une face de sortie du guide de lumière sombre, c'est-à-dire une source lumineuse élémentaire secondaire 52 éteinte, et donc la génération d'une bande sombre dans le faisceau lumineux segmenté.

La figure 4 illustre le cas où toutes les sources lumineuses primaires sont allumées et donc le cas d'éclairage feu de route où est éclairé l'ensemble de la scène de route devant le véhicule équipé du module optique selon l'invention, et la figure 5 illustre le cas d'un éclairage avec un faisceau partiel afin de ne pas éblouir le conducteur d'un véhicule automobile amené à croiser le véhicule équipé du module optique selon l'invention. Le cas d'un éclairage partiel est automatiquement mis en œuvre dès qu'un véhicule est détecté à une certaine distance du véhicule, et plus particulièrement lorsque ce véhicule venant en sens inverse est à une distance telle qu'il est éclairé par l'un des segments projetés sur la scène de route à gauche de l'axe longitudinal.

Un tunnel sombre est ainsi formé dans le faisceau pour prévenir l'éblouissement du véhicule détecté, ceci étant plus particulièrement réalisé en éteignant des sources lumineuses élémentaires primaires 4 spécifiques correspondant à la position du véhicule détecté sur la route. On notera que dans le cas illustré sur la figure 5, vue depuis l'intérieur du véhicule, uniquement les trois premiers guides de lumière 11 situés à droite de l'axe optique sont éteints pour générer un tunnel sombre de dimension transversale correspondant à trois premiers faisceaux élémentaires 11', à gauche de l'axe optique.

Selon l'invention, il convient de noter que le tunnel sombre est réalisé par l'extinction de sources lumineuses primaires associées à un pixel haute résolution et ceci est particulièrement avantageux en ce que cela permet d'éviter un niveau de luminosité parasite élevé. En effet, tel que cela a été précisé précédemment, ce phénomène de luminosité parasite est d'autant plus présent que la face d'entrée du guide de lumière en regard de sa source lumineuse élémentaire primaire correspondante est étroite, puisque les rayons peuvent plus facilement se propager à côté du guide disposé en regard de la source. En d'autres termes, le phénomène d'apparition d'une luminosité parasite est potentiellement plus élevé pour les premiers guides de lumière que pour les deuxièmes guides de lumière, étant rappelé que les premiers guides de lumière présentent une dimension transversale de valeur inférieure à celle de la dimension transversale des deuxièmes guides de lumière. On comprend alors que le fait de prévoir d'associer les pixels haute résolution à la réalisation ou non du tunnel sombre permet de limiter le nombre de pixels haute résolution allumés lorsque le tunnel sombre est mis en œuvre et donc de limiter le phénomène de parasite potentiel. Par ailleurs, une telle configuration de l'invention permet de faire correspondre de part et d'autre du tunnel sombre des pixels haute résolution et d'affiner la quantité et la qualité de la lumière proche du véhicule roulant dans le tunnel sombre, et donc d'améliorer l'éclairage des abords du véhicule sans risquer d'éblouir pour autant le conducteur.

Lorsque le module de contrôle associé au module optique détermine que le risque d'éblouissement d'un conducteur est passé, les sources lumineuses sont toutes activées de nouveau de manière à éclairer l'intégralité de la scène de route. Selon une caractéristique de l'invention, il convient de noter que l'activation de ces sources lumineuses précédemment éteintes et correspondant aux pixels haute résolution est réalisée via l'usage d'une unité de modulation de largeur d'impulsion. En effet, en fonctionnement d'éclairage standard, c'est-à-dire quand toutes les sources lumineuses élémentaires primaires 4 sont allumées, il est nécessaire de répondre à la réglementation imposant que l'intensité maximale du faisceau segmenté projeté soit centrée sur l'axe longitudinal du véhicule. Il est donc prévu selon l'invention de compenser le décalage transversal majoritaire des pixels haute résolution formant les premiers faisceaux élémentaires 11' par un pilotage à moindre intensité d'au moins certaines des sources lumineuses élémentaires primaires 4 associées à ces pixels haute résolution. A titre d'exemple non limitatif, l'intensité lumineuse de ces sources lumineuses primaires peut être réduite à 80% de leur intensité maximale.

De la sorte, on fait diminuer l'intensité d'émission des sources lumineuses élémentaires primaires associées à la projection des premiers faisceaux élémentaires 11' pour qu'elles émettent une intensité lumineuse sensiblement égale à l'intensité lumineuse émise par les sources lumineuses élémentaires primaires associées à la projection des deuxièmes faisceaux élémentaires 12'. Avantageusement, il en résulte une tache d'intensité maximale centrée sur l'axe longitudinal qui est élargie par rapport à la tâche d'intensité maximale classiquement réalisée dans l'art antérieur. Il est également possible de faire varier l'intensité lumineuse de chacune des sources lumineuses élémentaires primaires afin que, dans ce contexte de tache d'intensité maximale centrée sur l'axe longitudinal du véhicule, l'intensité du faisceau décroit régulièrement lorsque l'on s'éloigne de cette tache centrale.

On notera que le module optique 100 tel qu'il vient d'être décrit, avec les guides de lumières correspondant à la formation des pixels « haute résolution », prend également un intérêt dans la réalisation d'une fonction de feu d'éclairage directionnel, aussi connue sous l'appellation "DBL" pour "Dynamic Bending Light". L'intérêt d'une telle fonction est de prévoir le pivotement du faisceau projeté vers l'intérieur du virage afin de fournir une visibilité optimale au conducteur. Selon l'invention, plutôt que de faire pivoter le module optique dans son ensemble pour décaler l'axe optique de ce module par rapport à l'axe longitudinal médian du véhicule correspondant à la direction générale d'avancement de celui-ci, les sources lumineuses primaires sont allumées sélectivement pour décentrer le faisceau lumineux segmenté projeté de la valeur de décalage règlementaire pour la réalisation de la fonction DBL, par exemple entre 5° et 9° sans que cela soit limitatif de l'invention. En d'autres termes, un certain nombre de sources lumineuses élémentaires primaires est allumé, formant un premier ensemble centré sur l'axe longitudinal du véhicule, lors d'un éclairage de la scène de route en ligne droite, avec des sources lumineuses élémentaires primaires non utilisées aux extrémités de la série transversale de ces sources, et un même nombre de sources lumineuses élémentaires primaires est allumé lors d'un éclairage de la route en virage avec un décalage transversal de l'ensemble allumé, qui n'est plus centré sur l'axe longitudinal du véhicule. Dans l'exemple illustré, lors d'un virage à gauche, les sources lumineuses élémentaires primaires sont allumées de manière à décaler le faisceau lumineux segmenté vers la gauche de l'axe longitudinal, de sorte que ce sont principalement les sources lumineuses primaires élémentaires agencées sur la droite de la série qui sont allumées. Bien entendu, un véhicule pour trafic à droite impliquerait un allumage inversé des sources lumineuses élémentaires primaires. On peut alors constater que la série de guides de lumières éclairés par les sources lumineuses élémentaires primaires se centre sur les premiers guides de lumière 11, décalés transversalement selon l'invention par rapport à l'axe optique longitudinal. Il en résulte que lors de la réalisation de la fonction DBL, le faisceau lumineux projeté vers l'intérieur du virage présente un centre à intensité lumineuse maximale, ce qui améliore la visibilité du conducteur.

## Revendications

1. Module optique (100) pour véhicule automobile comprenant un premier élément optique (1) comportant des guides de lumière (11, 12) et une optique de projection (3) disposée à distance du premier élément optique (1) et ayant un axe optique longitudinal (O),
les guides de lumière étant alignés en une série, perpendiculairement à l'axe optique longitudinal (O) et selon une direction transversale,
les guides de lumière comportant des premiers guides de lumière (11) disposés successivement les uns par rapport aux autres en étant interposés entre des deuxièmes guides de lumière (12),
les premiers guides de lumière (11) présentant chacun une dimension transversale inférieure à la dimension transversale équivalente de chacun deuxièmes guides de lumière (12),
les premiers guides de lumière (11) étant majoritairement décalés transversalement par rapport à l'axe optique longitudinal (O),
**caractérisé en ce que** le premier élément optique (1) comprend successivement des deuxièmes guides de lumière (12) formant une première sous-série (A) de deux à quatre deuxièmes guides de lumière (12), des premiers guides de lumière (11) formant une deuxième sous-série (B) de trois à huit premiers guides de lumière (11), et des deuxièmes guides de lumière (12) formant une troisième sous-série (C) de quatre à six deuxièmes guides de lumière (12).

2. Module optique (100)selon la revendication précédente, **caractérisé en ce que** les premiers guides de lumière (11) forment une série agencée par rapport à l'axe optique longitudinal de sorte que la totalité des premiers guides de lumière (11) est située d'un même côté de l'axe optique longitudinal (O).

3. Module optique (100) selon l'une quelconque des revendications précédentes, **caractérisé en ce qu'**un axe longitudinal médian (O') des premiers guides de lumière (11) est décalé transversalement par rapport à l'axe optique longitudinal (O) d'une valeur de 0,5° à 5°.

4. Module optique (100) selon l'une quelconque des revendications précédentes, **caractérisé en ce que** le premier élément optique (1) est réalisé en un seul bloc comportant la pluralité des guides de lumière, ledit premier élément optique (1) présentant une face de sortie (10) commune de rayons de lumière amenés à traverser l'un ou l'autre des guides de lumière.

5. Module optique (100) selon l'une quelconque des revendications précédentes, **caractérisé en ce qu'**un deuxième élément optique (2) est agencé entre le premier élément optique (1) et l'optique de projection (3).

6. Module optique (100) selon l'une quelconque des revendications précédentes, dans lequel les premiers guides de lumière (11) sont chacun associés à une source lumineuse élémentaire (4) en vue de projeter des premiers faisceaux élémentaires (11') et dans lequel les deuxièmes guides de lumière (12) sont chacun associés à une source lumineuse élémentaire (4) en vue de projeter des deuxièmes faisceaux élémentaires (12'), l'optique de projection (3) permettant la projection suivant l'axe optique longitudinal (O) d'un faisceau lumineux segmenté formé par les premiers faisceaux élémentaires (11') et les deuxièmes faisceaux élémentaires (12'), **caractérisé en ce que** les premiers faisceaux élémentaires (11') sont majoritairement décalés par rapport à l'axe optique longitudinal (O).

7. Module optique (100) selon la revendication précédente, dans lequel le module optique comprend une unité de modulation de largeur d'impulsion configurée pour piloter au moins certaines des sources lumineuses élémentaires primaires (4) associées aux premiers guides de lumière (11) de sorte que les premiers faisceaux élémentaires (11') et les deuxièmes faisceaux élémentaires (12') agencés au centre du faisceau lumineux segmenté présentent une même intensité lumineuse.

8. Véhicule automobile comportant au moins un projecteur comprenant un module optique (100) selon l'une quelconque des revendications précédentes.

9. Véhicule automobile selon la revendication précédente et présentant un axe longitudinal médian parallèle à la direction d'avancement de ce véhicule, caractérisé en ce l'au moins un projecteur est un projecteur gauche, le module étant agencé de telle manière que les premiers guides de lumière (11) sont majoritairement situés entre l'axe optique longitudinal (O) et l'axe longitudinal médian du véhicule.

## Patentansprüche

1. Optisches Modul (100) für Kraftfahrzeug, das ein erstes optisches Element (1) mit Lichtleitern (11, 12) und eine Projektionsoptik (3), die in einem Abstand von dem ersten optischen Element (1) angeordnet ist und eine longitudinale optische Achse (O) besitzt, umfasst,
wobei die Lichtleiter in einer Reihe senkrecht zu der longitudinalen optischen Achse (O) und in einer transversalen Richtung angeordnet sind,
wobei die Lichtleiter erste Lichtleiter (11) aufweisen, die relativ zueinander nacheinander angeordnet sind und zwischen zweite Lichtleiter (12) eingefügt sind,
wobei die ersten Lichtleiter (11) jeweils eine transversale Abmessung besitzen, die kleiner als die äquivalente transversale Abmessung jedes zweiten Lichtleiters (12) ist,
wobei die ersten Lichtleiter (11) hauptsächlich transversal in Bezug auf die longitudinale optische Achse (O) versetzt sind,
**dadurch gekennzeichnet, dass** das erste optische Element (1) nacheinander zweite Lichtleiter (12) aufweist, die eine erste Unterreihe (A) aus zwei bis vier zweiten Lichtleitern (12) bilden, wobei erste Lichtleiter (11) eine zweite Unterreihe (B) aus drei bis acht ersten Lichtleitern (11) bilden und zweite Lichtleiter (12) eine dritte Unterreihe (C) aus vier bis sechs zweiten Lichtleitern (12) bilden.

2. Optisches Modul (100) nach dem vorhergehenden Anspruch, **dadurch gekennzeichnet, dass** die ersten Lichtleiter (11) eine Reihe bilden, die in Bezug auf die longitudinale optische Achse so angeordnet ist, dass sich die Gesamtheit der ersten Lichtleiter (11) auf derselben Seite der longitudinalen optischen Achse (O) befindet.

3. Optisches Modul (100) nach einem der vorhergehenden Ansprüche, **dadurch gekennzeichnet, dass** eine longitudinale Medianachse (O') der ersten Lichtleiter (11) transversal in Bezug auf die longitudinale optische Achse (O) um einen Wert von 0,5° bis 5° versetzt ist.

4. Optisches Modul (100) nach einem der vorhergehenden Ansprüche, **dadurch gekennzeichnet, dass** das erste optische Element (1) aus einem Teil hergestellt ist und mehrere Lichtleiter umfasst, wobei das erste optische Element (1) eine gemeinsame Austrittsfläche (10) für Lichtstrahlen, die so geführt werden, dass sie durch den einen oder den anderen der Lichtleiter verlaufen, aufweist.

5. Optisches Modul (100) nach einem der vorhergehenden Ansprüche, **dadurch gekennzeichnet, dass** zwischen dem ersten optischen Element (1) und der Projektionsoptik (3) ein zweites optisches Element (2) angeordnet ist.

6. Optisches Modul (100) nach einem der vorhergehenden Ansprüche, wobei die ersten Lichtleiter (11) jeweils einer elementaren Lichtquelle (4) zugeordnet sind, um erste elementare Strahlenbündel (11') zu projizieren, und wobei zweite Lichtleiter (12) jeweils einer elementaren Lichtquelle (4) zugeordnet sind, um zweite elementare Strahlenbündel (12') zu projizieren, wobei die Projektionsoptik (3) die Projektion längs der longitudinalen optischen Achse (O) eines segmentierten Lichtstrahlenbündels, das durch die ersten elementaren Strahlenbündel (11') und die zweiten elementaren Strahlenbündel (12') gebildet ist, ermöglicht, **dadurch gekennzeichnet, dass** die ersten elementaren Strahlenbündel (11') hauptsächlich in Bezug auf die longitudinale optische Achse (O) versetzt sind.

7. Optisches Modul (100) nach dem vorhergehenden Anspruch, wobei das optische Modul eine Impulsbreiten-Modulationseinheit umfasst, die konfiguriert ist, wenigstens bestimmte der primären elementaren Lichtquellen (4), die den ersten Lichtleitern (11) zugeordnet sind, zu steuern, derart, dass die ersten elementaren Strahlenbündel (11') und die zweiten elementaren Strahlenbündel (12'), die im Zentrum des segmentierten Lichtstrahlenbündels angeordnet sind, dieselbe Lichtstärke aufweisen.

8. Kraftfahrzeug, das wenigstens einen Scheinwerfer umfasst, der ein optisches Modul (100) nach einem der vorhergehenden Ansprüche enthält.

9. Kraftfahrzeug nach dem vorhergehenden Anspruch, das eine longitudinale Medianachse parallel zu der Vorwärtsbewegungsrichtung dieses Fahrzeugs aufweist, **dadurch gekennzeichnet, dass** der wenigstens eine Scheinwerfer ein linker Scheinwerfer ist, wobei das Modul so beschaffen ist, dass die ersten Lichtleiter (11) sich hauptsächlich zwischen der longitudinalen optischen Achse (O) und der longitudinalen Medianachse des Fahrzeugs befinden.

## Claims

1. Optical module (100) for a motor vehicle including a first optical element (1) comprising light guides (11, 12) and a projection optic (3) arranged at a distance from the first optical element (1) and having a longitudinal optical axis (O),
the light guides being aligned in a series perpendicular to the longitudinal optical axis (O) and in a transverse direction,
the light guides comprising first light guides (11) arranged successively with respect to each other by being interposed between second light guides (12),
the first light guides (11) each having a transverse dimension less than the equivalent transverse dimension of each of the second light guides (12),
the first light guides (11) being predominantly offset transversely with respect to the longitudinal optical axis (O),
**characterized in that** the first optical element (1) successively includes second light guides (12) forming a first subseries (A) of two to four second light guides (12), first light guides (11) forming a second subseries (B) of three to eight first light guides (11), and second light guides (12) forming a third subseries (C) of four to six second light guides (12)..

2. Optical module (100) according to the preceding claim, **characterized in that** the first light guides (11) form a series arranged with respect to the longitudinal optical axis so that all of the first light guides (11) are located on the same side of the longitudinal optical axis (O).

3. Optical module (100) according to any one of the preceding claims, **characterized in that** a median longitudinal axis (O') of the first light guides (11) is offset transversely with respect to the longitudinal optical axis (O) with a value of 0.5° to 5°.

4. Optical module (100) according to any one of the preceding claims, **characterized in that** the first optical element (1) is made in a single block comprising the plurality of the light guides, said first optical element (1) having a common output face (10) for light rays caused to pass through one or other of the light guides.

5. Optical module (100) according to any one of the preceding claims, **characterized in that** a second optical element (2) is arranged between the first optical element (1) and the projection optic (3).

6. Optical module (100) according to any one of the preceding claims, wherein the first light guides (11) are each associated with an elementary light source (4) for the purpose of projecting first elementary beams (11') and wherein the second light guides (12) are each associated with an elementary light source (4) for the purpose of projecting second elementary beams (12'), the projection optic (3) allowing the projection along the longitudinal optical axis (O) of a segmented light beam formed by the first elementary beams (11') and the second elementary beams (12'), **characterized in that** the first elementary beams (11') are predominantly offset with respect to the longitudinal optical axis (O).

7. Optical module (100) according to the preceding claim, wherein the optical module includes a pulse width modulation unit configured for controlling at least some of the primary elementary light sources (4) associated with the first light guides (11) so that the first elementary beams (11') and the second elementary beams (12') arranged at the centre of the segmented light beam have the same light intensity.

8. Motor vehicle comprising at least one headlight including an optical module (100) according to any one of the preceding claims.

9. Motor vehicle according to the preceding claim and having a median longitudinal axis parallel to the direction of travel of this vehicle, **characterized in that** the at least one headlight is a left headlight, the module being arranged such as the first light guides (11) are predominantly located between the longitudinal optical axis (O) and the median longitudinal axis of the vehicle.
